# EUROPEAN PATENT SPECIFICATION

(11) **EP 4 541 120 B1**
(45) Date of publication and mention of the grant of the patent: **29.07.2026**
(21) Application number: 22951567.1
(22) Date of filing: 22.07.2022
(51) Int. Cl.: H04W 72/12, H04L 5/00

(54) **METHODS FOR ENABLING SIMULTANEOUS MULTI PANEL PHYSICAL UPLINK SHARED CHANNEL TRANSMISSIONS**
VERFAHREN ZUR ERMÖGLICHUNG GLEICHZEITIGER ÜBERTRAGUNGEN ÜBER MEHRERE PLATTEN EINES GEMEINSAM GENUTZTEN PHYSIKALISCHEN UPLINK-KANALS
PROCÉDÉS POUR PERMETTRE DES TRANSMISSIONS SIMULTANÉES DE CANAL PARTAGÉ DE LIAISON MONTANTE PHYSIQUE À PANNEAUX MULTIPLES

(43) Date of publication of application: 23.04.2025
(73) Proprietor: Apple Inc., Cupertino, CA 95014 (US)
(72) Inventor: FAKOORIAN, Seyed Ali Akbar, Cupertino, California 95014 (US); ZENG, Wei, Cupertino, California 95014 (US); YE, Chunxuan, Cupertino, California 95014 (US); ZHANG, Dawei, Cupertino, California 95014 (US); SUN, Haitong, Cupertino, California 95014 (US); ZHANG, Yushu, Beijing 100022 (CN); NIU, Huaning, Cupertino, California 95014 (US)
(74) Representative: Rooney, John-Paul
(86) International application number: PCT/CN2022/107239
(87) International publication number: WO 2024/016295

(56) References cited:
- WO-A1-2022/030819
- WO-A1-2022/133927
- CN-A- 112 351 504
- US-A1- 2021 092 744
- US-A1- 2021 250 134
- US-A1- 2022 140 954
- US-A1- 2022 140 954
- QUALCOMM INCORPORATED: "Multi-TRP Enhancements", vol. RAN WG1, no. Chongqing, China; 20191014 - 20191020, 5 October 2019 (2019-10-05), XP051808849, Retrieved from the Internet <URL:https://ftp.3gpp.org/tsg_ran/WG1_RL1/TSGR1_98b/Docs/R1-1911126.zip R1-1911126 Multi-TRP Enhancements.docx> [retrieved on 20191005]

## Description

### TECHNICAL FIELD

This application relates generally to wireless communication systems, including methods and systems for enabling simultaneous multi panel (MP) physical uplink shared channel (PUSCH) transmissions. More specifically, this application relates to an apparatus.

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In some deployments, the E-UTRAN may also implement NR RAT. In some deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

US 2022/140954 A1 discloses a method for transmitting and receiving HARQ-ACK information in a wireless communication system and a device are disclosed. Specifically, a method of transmitting, by a user equipment (UE), HARQ-ACK information in a wireless communication system is disclosed that comprises receiving first downlink control information (DCI) based on a first control resource set group and second DCI based on a second control resource set group; determining a physical uplink control channel (PUCCH) resource for a transmission of the HARQ-ACK information; and transmitting the HARQ-ACK information based on the determined PUCCH resource, wherein the first DCI and the second DCI are indexed based on (i) an index of a physical downlink control channel (PDCCH) related monitoring occasion, (ii) a cell index, and (iii) an index associated with each control resource set group, and wherein the PUCCH resource is determined based on a last DCI among the first DCI and the second DCI.

3GPP DRAFT, R1-1911126, Qualcomm Incorporated, 5 October 2019, discloses Multi-TRP Enhancements.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 shows an example wireless communication system, according to embodiments described herein.
FIGs. 2A-2C illustrate examples of two physical uplink shared channels (PUSCHs) overlapping when space-division multiplexed (SDMed) or frequency division multiplexed (FDMed), according to embodiments described herein.
FIGs. 3A-3B illustrate example multiplexing of hybrid automatic repeat request acknowledgments (HARQ-ACKs), according to embodiments described herein.
FIG. 4 illustrates an example flow-chart of operations that may be performed by a UE, according to embodiments described herein.
FIG. 5 illustrates an example flow-chart of operations that may be performed by a base station, according to embodiments described herein.
FIG. 6 illustrates an example flow-chart of operations that may be performed by a UE, according to embodiments described herein.
FIG. 7 illustrates an example architecture of a wireless communication system, according to embodiments described herein.
FIG. 8 illustrates a system for performing signaling between a wireless device and a network device, according to embodiments described herein.

### DETAILED DESCRIPTION

There is provided an apparatus as defined in the appended claims.

In the present disclosure, various embodiments are related to methods and systems for enabling simultaneous multi panel (MP) physical uplink shared channel (PUSCH) transmissions. As used herein, "simultaneous" transmissions may include transmissions that are transmitted in a substantially contemporaneous manner. In particular, the embodiments described herein are related to methods and systems for indicating simultaneous multi-panel PUSCH transmissions (or uplink (UL) transmission) using UL precoding indication for PUSCH transmission, and/or UL beam indication for physical uplink control channel (PUCCH) and/or PUSCH. The UL precoding indication and/or UL beam indication are transmitted in a single downlink control information (S-DCI) or multi-DCI based multiple transmission-reception point (multi-TRP or m-TRP) operation.

Further, for cases of multi-DCI based multi-TRP operation, two PUSCHs or two PUCCHs may be transmitted to two different TRPs in the same CC. A TRP, as described herein, may refer to a user equipment (UE), a base station, an access point, a Wi-Fi router, and so on. Two or more PUSCHs may be transmitted in a UL direction using one or more antenna panels of a UE. In some embodiments, a total number of layers and a total number of codewords across all antenna panels may be, for example, four and two, respectively.

In the 3^{rd} Generation Partnership Project (3GPP) Technical Specification (TS) 38.214 Release 16, simultaneous physical downlink shared channel (PDSCH) receptions for m-TRP are mentioned using S-DCI or m-DCI. If simultaneous PDSCH receptions are scheduled by S-DCI, then PDSCH resources associated with different downlink (DL) beams (or spatial Rx filters) are frequency domain multiplexed (FDMed) or spatial domain multiplexed (SDMed). In section 5.1 of TS 38.214, it is described that the UE is indicated with two transmission configuration indication (TCI) states in a codepoint of the DCI field "TCI" and demodulation reference signal (DM-RS) port(s) within one code division multiplexing (CDM) group in the DCI field "antenna port(s)." In section 5.1.6.2 of TS 38.214, it is described that when a UE is not indicated with a DCI that the DCI field "Time Domain Resource Assignment" (TDRA) indicating an entry which contains repetitionNumber in PDSCH-TDRA, the UE is not configured with sfnSchemePdsch and it is indicated with two TCI states in a codepoint of the DCI field "TCI" and DM-RS port(s) within two CDM groups in the DCU field "antenna port(s)." In this case, the first TCI state corresponds to the CDM group of the first antenna port indicated by the antenna port table, and the second TCI state corresponds to the other CDM group.

If simultaneous PDSCH receptions are scheduled by m-DCI, two PDSCH receptions can be fully or partially overlapping, or non-overlapping, in a time domain and a frequency domain. Physical data control channels (PDCCHs) that schedule two PDSCHs are associated to different ControlResourceSets having different values of coresetPoolIndex.

In Release 17, a UE can also transmit multiple repetitions of the same transmission block (TB) across different UL beams, where repetitions are in a time division multiplexing (TDM) mode. In this case, the beam indication is through extending a sounding reference signal (SRS) resource indicator (SRI) bit field, when two SRS resource sets with a usage as a codebook or a non-codebook is configured. However, in Release 17, simultaneous PUSCH transmission is not supported using frequency division multiplexing (FDM) or space division multiplexing (SDM). Various embodiments in the present disclosure may describe methods and systems for simultaneous PUSCH transmissions in a m-TRP scenario.

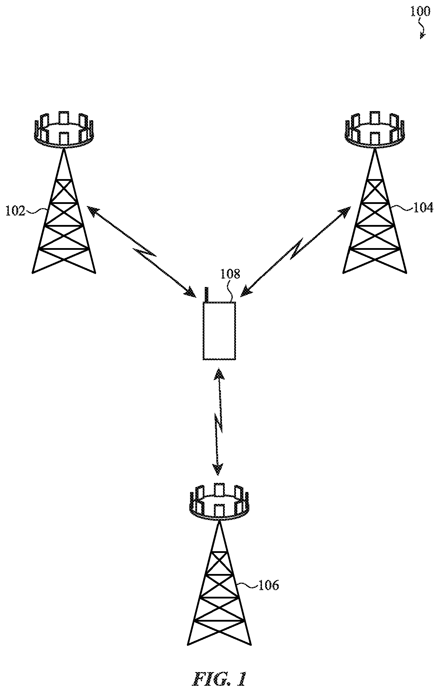

FIG. 1 shows an example wireless communication system, according to embodiments described herein. As shown in FIG. 1, a wireless communication system 100 may include base stations 102, 104, and 106, and a UE 108. In some embodiments, the base stations 102, 104, and 106 may be an eNb, an eNodeB, a gNodeB, or an access point (AP) in a radio access network (RAN) and may support one or more radio access technologies, such as 4G, 5G, 5G new radio (5G NR), and so on. The UE 108 may be a phone, a smart phone, a tablet, a smartwatch, an Internet-of-Things (IoT), and so on. By way of a non-limiting example, each base station of the base stations 102, 104, and 106 may serve as a TRP for communication with the UE 108 in a UL direction and a DL direction. The UE 108 may use one or more antenna panels to alternately, simultaneously, or contemporaneously send UL transmissions of data and/or control information, such as PUCCH, PUSCH, SRS, to one or more TRPs, and DL reception of the data and/or control information, such as PDCCH, PDSCH, and so on.

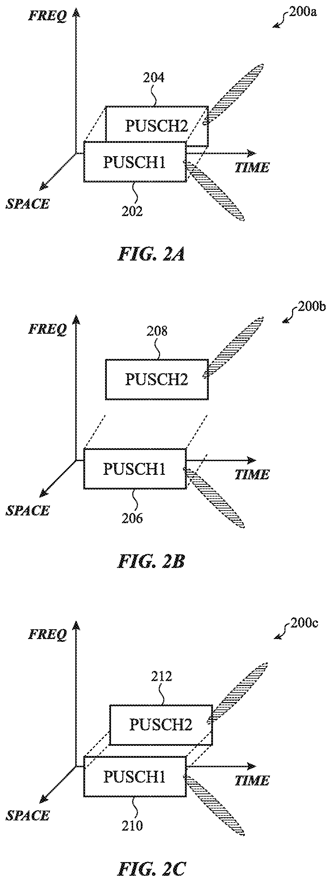

FIG. 2A, FIG. 2B, and FIG. 2C illustrate an example of full overlapping in a frequency domain, no overlapping in a frequency domain, and partial overlapping in a frequency domain, respectively. For example, in a diagram 200a, two PUSCHs 202 and 204 are space division multiplexed and transmitted via multi-TRPs. As shown in the diagram 200a, the PUSCHs 202 and 204 may be fully overlapping over each other in a frequency domain, and also in a time domain. In a diagram 200b, two PUSCHs 206 and 208 which are frequency division multiplexed are not overlapping in a frequency domain, while as shown in a diagram 200c, two PUSCHs 210 and 212, which are frequency multiplexed are partially overlapping in a frequency domain.

Various embodiments, as described herein, may address potential issues related to simultaneous multi-panel PUSCH transmissions (STxMP) using S-DCI or m-DCI. For example, for STxMP using m-DCI, the potential issues may be related to a DM-RS configuration, such as whether a DM-RS symbol location for the two PUSCH transmissions may be aligned or not. Another potential issue may be associated with frequency hopping (FH), such as when one PUSCH of the two PUSCHs is indicated with intra-slot FH or inter-slot FH but not the other PUSCH of the two PUSCHs. In some embodiments, FH may also impact DM-RS alignment or misalignment. Another issue that needs to be addressed is two PUSCHs that are overlapping as shown, for example, in FIG. 2A, FIG. 2B, and/or FIG. 2C, when scheduled by different DCIs having a different value of a total downlink assignment index (TDAI), what should be a value for each TDAI. Other issues may be associated with a priority indicator value for each PUSCH of STxMP having different priority values, and a UE behavior when a total number of layers across two STxMP PUSCHs scheduled by m-DCIs exceeds four.

Various embodiments, as described herein, may address potential issues related to STxMP using s-DCI, which may be related to a TDAI indication for a dynamic hybrid automatic repeat request acknowledgement (HARQ-ACK) codebook, and how to use a multi-grant PUSCH procedure to indicate STxMP PUSCHs. An issue related to the TDAI indication for the dynamic HARQ-ACK codebook may be whether the overlapping PUSCHs, for example, as shown in FIG. 2A, FIG. 2B, and/or FIG. 2C, that are scheduled by the S-DCI have their own TDAI indication in which a second TDAI is repurposed, and what each TDAI should indicate.

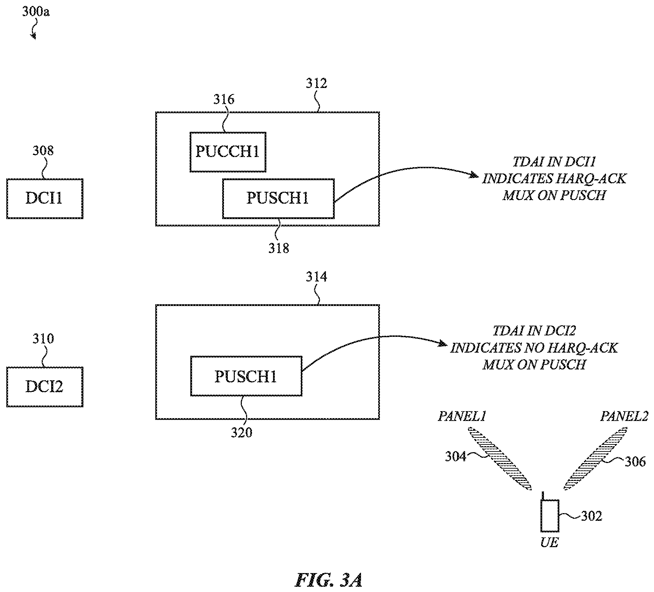

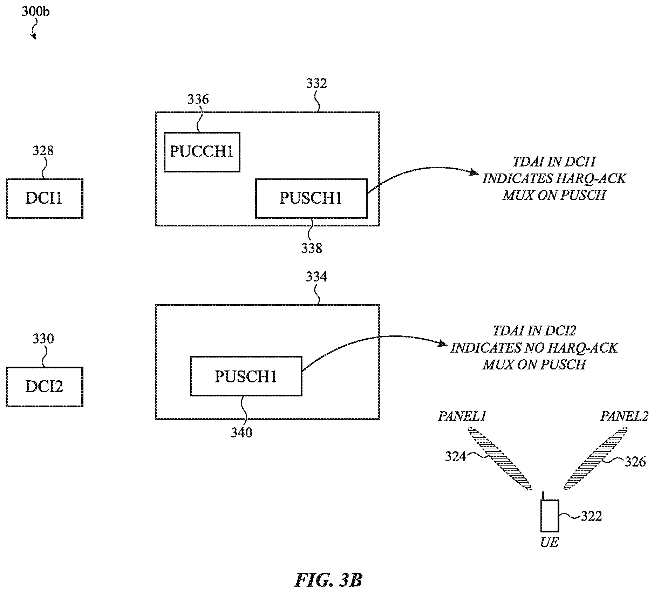

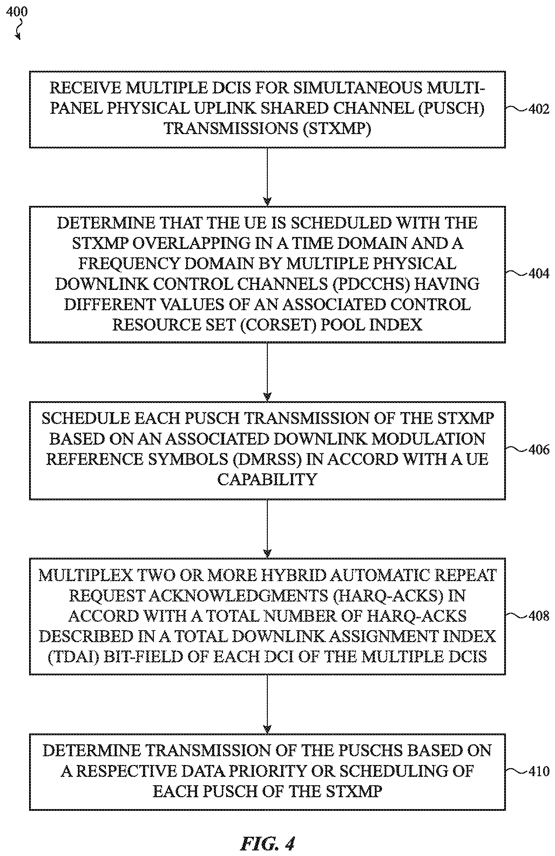

Various solutions to the above-described issues related to STxMP using m-DCI or S-DCI are detailed below using FIG. 4, FIG. 5, and FIG. 6. Accordingly, skipping FIGs. 3A and 3B, for a while, FIG. 4 illustrates an example flow-chart of operations that may be performed by a UE, according to embodiments described herein. As shown in a flow-chart 400, at 402, a UE may receive m-DCIs for STxMP. As described herein, in Release 16, simultaneous reception of PDSCH is supported, and when two PDSCHs are scheduled by multi-TRP having two different values of coresetPoolIndex in a ControlResourceSet, as described in section 5.1.6.2 of 3GPP TS 38.213, the UE cannot assume a different DM-RS configuration with respect to the actual number of front-loaded DM-RS symbol(s), an actual number of additional DM-RS symbol(s), an actual DM-RS symbol location, and a DM-RS configuration type. The UE cannot also assume DM-RS ports in a CDM group are indicated by two TCI states.

At 404, the UE may determine whether the m-DCIs received by the UE at 402 indicate the UE is scheduled with fully or partially overlapping PUSCHs in a time domain and a frequency domain, such as shown in FIG. 2A and/or FIG. 2C, by multiple physical downlink control channels (PDCCHs) (or at least two PDCCHs) having different values of coresetPoolIndex. Based on the determination made at 404 that the m-DCIs received by the UE at 402 indicate the UE is scheduled with fully or partially overlapping PUSCHs in a time domain and a frequency domain, such as shown in FIG. 2A and/or FIG. 2C, by multiple physical downlink control channels (PDCCHs) (or at least two PDCCHs) having different values of coresetPoolIndex, the UE may perform operations described herein using 406, 408, and/or 410.

At 406, the UE may schedule each PUSCH transmission of the STxMP based on associated DM-RSs according to a UE capability based on the determination made at 404 that the m-DCIs received by the UE at 402 indicate the UE is scheduled with fully or partially overlapping PUSCHs in a time domain and a frequency domain, such as shown in FIG. 2A and/or FIG. 2C, by multiple physical downlink control channels (PDCCHs) (or at least two PDCCHs) having different values of coresetPoolIndex. In some embodiments, and by way of a non-limiting example, at 404, a scheduler of the UE may need to verify that DM-RS indications associated with each PUSCH of the STxMP have DM-RS symbols aligned in time. In other words, symbol locations for DM-RS symbols for each PUSCH of the STxMP has to be the same, in addition to a total number of DMRS symbols including additional DMRS symbols.

Additionally, or alternatively, the scheduler of the UE, at 404, may also verify that a DMRS configuration type associated with each DMRS indication is also the same. In other words, a DMRS configuration type for all DMRS indications either needs to be of DMRS configuration type-1 or DMRS configuration type-2.

In some embodiments, the scheduler of the UE, at 404, may also verify that DM-RS ports for the two PUSCHs of STxMP belong to different CDM groups indicated by two TCI states.

In some embodiments, based on a specific UE capability, the scheduler of the UE may ignore to verify time alignment of DMRS symbols, configuration types corresponding to each DMRS indication, and/or CDM groups associated with DM-RS ports,

In some embodiments, at 404, the scheduler of the UE may also verify that each PUSCH of the STxMP is scheduled by intra-slot FH, or no PUSCH of the STxMP is scheduled by intra-slot FH. A single bit in DCI may indicate whether FH is enabled or not, and the UE may be configured with either inter-slot FH or intra-slot FH. When the UE is configured with intra-slot FH, a number of DMRS symbols and/or a location corresponding to a DMRS symbol may change. Accordingly, when each PUSCH of the STxMP is scheduled by intra-slot FH, DM-RS symbols are still aligned in time. Additionally, or alternatively, the scheduler of the UE may also verify if at least one PUSCH of the STxMP is scheduled using inter-slot FH, no FH is mentioned for other remaining PUSCHs of the STxMP.

In some embodiments, at 408, the UE may multiplex two or more HARQ-ACKs according to a total number HARQ-ACKs for multiplexing, as described in a TDAI bit-field of each DCI of the m-DCI received at 402. By way of a non-limiting example, the TDAI bit-field of each DCI of the multiple DCIs may correspond with an associated TRP of multiple TRPs. When there is overlapping PUSCHs and PUCCH, instead of multiplexing a PUSCH only when a UL TDAI is not equal to 4, the UE may multiplex HARQ-ACKs to each PUSCH of the STxMP independently. In other words, the UE may multiplex HARQ-ACKs for each TRP according to a TDAI bit-field value of its corresponding DCI.

For example, as shown in FIG. 3A in diagram 300a, a UE 302 may have two TRPs, and the UE may perform UL transmission to two TRPs using, for example, a panel1 304 and a panel2 306. The UE 302 may receive a DCI DCI1 308 corresponding to the a first TRP associated with the panel1 304, and a DCI DCI2 310 corresponding to a second TRP associated with the panel2 306. As shown in the diagram 300a, the UE may be scheduled for UL transmission 312 including PUCCH1 316 and PUSCH1 318, overlapping in time, via the panel1 304. Further, the UE 302 may be scheduled for UL transmission 314 including PUSCH1 320 via the panel2 306. The UL transmissions 312 and 314 are overlapping in time. By way of a non-limiting example, the TDAI in DCI2 310 may indicate no HARQ-ACK multiplexing, while the TDAI in DCI1 308 may indicate HARQ-ACK multiplexing. Accordingly, as described herein, the UE may multiplex HARQ-ACKs to each PUSCH independently, as specified in the TDAI field of each DCI of the TRP.

In another example, as shown in FIG. 3B in diagram 300b, a UE 322 may have two TRPs, and the UE may perform UL transmission to two TRPs using, for example, a panel1 324 and a panel2 326. The UE 302 may receive a DCI DCI1 328 corresponding to a first TRP associated with the panel1 324, and a DCI DCI2 330 corresponding to a second TRP associated with the panel2 326. As shown in the diagram 300b, the UE may be scheduled for UL transmission 332 including PUCCH1 336 and PUSCH1 338, not overlapping in time, via the panel1 324. Further, the UE 322 may be scheduled for UL transmission 334 including PUSCH1 340 via the panel2 326. The UL transmissions 332 and 334 are overlapping in time. By way of a non-limiting example, TDAI in DCI2 330 may indicate HARQ-ACK multiplexing, while the TDAI in DCI1 328 may indicate no HARQ-ACK multiplexing. Accordingly, as described herein, the UE may multiplex HARQ-ACKs to each PUSCH independently, as specified in the TDAI field of each DCI of the TRP.

In some embodiments, at 408, at least when simultaneous transmission of PUSCH and PUCCH is not allowed, the TDAI bit-field of DCI on a first panel (or a first TRP) of m-TRP may indicate a total number of HARQ-ACK bits from the first panel (or the first TRP) and a second panel (or a second TRP) to be multiplexed on PUSCH on the first panel of m-TRP. For example, as shown in the diagram 300b, the PUCCH1 336 and the PUSCH1 340 are being transmitted by different TRPs. The PUCCH1 336 and the PUSCH1 340 are overlapping in time. Accordingly, since TDAI in DCI2 330 indicates multiplexing of HARQ-ACK on the PUSCH, HARQ-ACKs for the PUCCH1 336 and the PUSCH1 340 may be multiplexed.

In some embodiments, additionally, or alternatively, when channel state information (CSI) carried by physical uplink control channel resource on the second panel (or the second TRP) overlaps with PUSCH on the first panel (or the first TRP), the UE may drop channel state information (CSI) carried by the PUCCH resource on the second panel (or the second TRP) if a CSI type of the CSI carried by the PUCCH resource on the second panel (or the second TRP) is the same as the CSI type of a PUCCH resource on the first panel (or the first TRP). In some embodiments, additionally, or alternatively, the CSI carrier by the PUCCH resource may be dropped and only HARQ-ACK may be multiplexed by the UE.

In some embodiments, at 410, the UE may determine transmission of the PUSCHs based on a respective data priority or scheduling of each PUSCH of the STxMP. For example, for a direct grant (DG) or a configured grant (CG) of the PUSCH, a priority flag may indicate data priority of the PUSCH. The priority indication may be used for intra-UE cancellation. In other words, low priority UL transmission may be cancelled in favor of high priority UL transmission. By way of a non-limiting example, in some embodiments, the UE may transmit both PUSCHs of the STxMP of the same or different priorities according to a UE capability. The UE capability may indicate the UE's behavior with respect to simultaneous transmission of PUSCHs of the same or different priorities.

In some embodiments, alternatively, or additionally, the UE may transmit only a high priority PUSCH and drop or cancel a low priority PUSCH for transmission. Further, cancellation of the low priority PUSCH for transmission may be based on a cancellation timeline, which may be further based on partial or full cancellation according to the UE capability. By way of a non-limiting example, the full cancellation and/or partial cancellation of the low priority PUSCH may be based on the last symbol of the DCI scheduling of the high priority PUSCH and the first symbol of the low priority PUSCH, and/or the start time of the first symbol of the high priority PUSCH and the low priority PUSCH. Additionally, or alternatively, partial cancellation of the low priority PUSCH may be further based on additional symbols that are based on the UE capability. In some embodiments, the UE capability may include or describe simultaneous transmission of the PUSCH of low priority, or cancellation of the PUSCH of low priority.

In some embodiments, a total number of layers across overlapping PUSCHs may not be more than a predetermined threshold number of layers, for example, four layers. Accordingly, the UE may transmit a PUSCH that is scheduled first. Additionally, or alternatively, the UE may transmit a PUSCH that has its associated DCI ending earlier than a DCI of other PUSCHs.

In some embodiments, the UE may implement actions with respect to the above issues mentioned above, and various solutions to these issues, as discussed herein, according to mutual agreement between the UE and the network, such as a core network, or a radio access network.

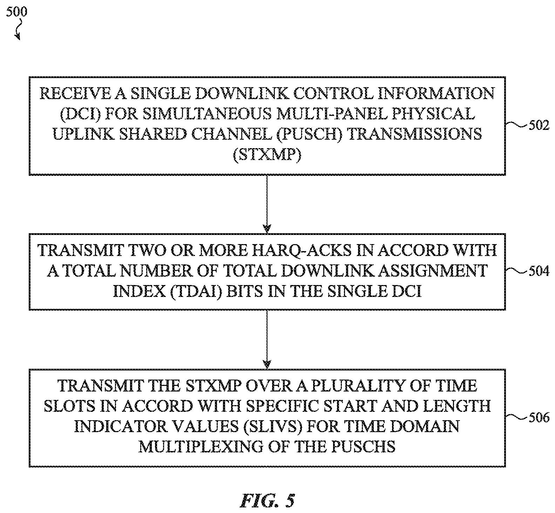

FIG. 5 illustrates an example flow-chart of operations that may be performed by a UE, according to embodiments described herein. As shown in a flow-chart 500, at 502, a UE may receive an s-DCI for a STxMP. The s-DCI may schedule two simultaneous multi-panel PUSCHs. The s-DCI may include one or more TDAI bit-fields.

At 504, the UE may transmit two or more HARQ-ACKs according to a total number of TDAI bits (bit-fields) in the s-DCI. By way of a non-limiting example, a single TDAI bit field may indicate a total number of HARQ-ACKs that can be multiplexed on a PUSCH. Additionally, or alternatively, for PUSCH repetitions, HARQ-ACKs may be multiplexed on each repetition. In some embodiments, when two or more TDAI bit-fields in the s-DCI are used, a first TDAI bit-field may be associated with the first PUSCH, and the second TDAI bit-field may be associated with the second PUSCH. Further, each TDAI bit-field may indicate HARQ-ACK bits associated to a PUCCH resource that is overlapping in time with the corresponding PUSCH of the same TRP.

In some embodiments, the UE may avoid a PUCCH overlap with a PUSCH scheduled by an s-DCI received at 502, and/or ignore the TDAI indication.

In some embodiments, at 506, the UE may transmit the STxMP over a plurality of time slots according to a specific start and length indicator values (SLIVs) for time domain multiplexing of the PUSCHs. The SLIVs may be indicated in a time-domain resource allocation (TDRA) bit-field that refers to a row with multiple SLIVs, as described in section 6.1.2 of 3GPP TS 38.214. By way of a non-limiting example, the first two SLIVs within the indicated TDRA row may be used for the STxMP, and the next two SLIVs may be used for the STxMP in the next slot (or time slot), and so on. Additionally, or alternatively, the first and the third SLIVs within the indicated TDRA row may be for a STxMP, and the second and the fourth SLIVs may be used for the STxMP in the next slot (or time slot), and so on.

In some embodiments, an association between a SLIV and a beam/TRP may be separately indicated, for example, using an SRS resource indicator (SRI) bit. For example, a first SLIV may be associated with the first beam/TRP, and the second SLIV may be associated with the second beam/TRP, or vice versa. In some embodiments, the scheduler may also verify that a total number of SLIVs within the indicated TDRA row are even. Additionally, or alternatively, the residual SLIVs may be considered to be associated with the first indicated beam.

In some embodiments, the UE may implement actions with respect to the above issues mentioned above, and various solutions to these issues, as discussed herein, according to mutual agreement between the UE and the network, such as a core network, or a radio access network.

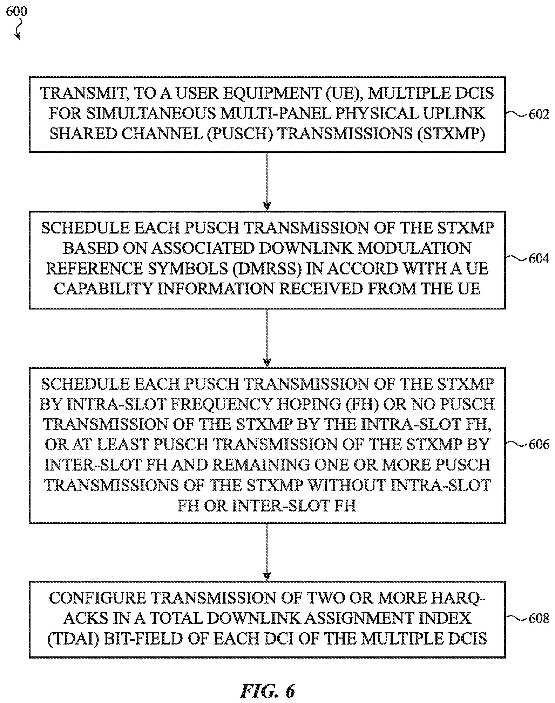

FIG. 6 illustrates an example flow-chart of operations that may be performed by a base station, according to embodiments described herein. As shown in a flow-chart 600, at 602, a base station may transmit to a UE, an m-DCI for a STxMP. By way of a non-limiting example, the base station may transmit to the UE the s-DCI for the STxMP. The STxMP may include multiple PUSCHs overlapping in a time domain and/or a frequency domain. The STxMP including multiple PUSCHs may be scheduled by multiple PDCCHs having different values of a corresponding CORESET pool index. At 604, the base station may schedule each PUSCH transmission of the STxMP based on associated DM-RS symbols according to UE capability information received from the UE.

At 606, the base station may schedule each PUSCH transmission of the STxMP by intra-slot frequency hopping (FH) or no PUSCH transmission of the STxMP by the intra-slot FH, or at least a PUSCH transmission of the STxMP by an inter-slot FH and remaining one or more PUSCH transmissions of the STxMP without the intra-slot FH or the inter-slot FH. At 608, the base station may configure transmission of two or more HARQ-ACKs in a total downlink assignment index (TDAI) bit-field of each DCI of the multiple DCIs.

By way of a non-limiting example, the base station may also configure transmission of two or more HARQ-ACKs in a total number of total downlink assignment index (TDAI) bits in the single DCI. As described herein, in accordance with some embodiments, a single TDAI bit may indicate multiplexing the two or more HARQ-ACKs, and multiple TDAI bits may indicate transmitting an HARQ-ACK associated with a physical uplink control channel (PUCCH) resource overlapping in time with a corresponding PUSCH of the same TRP.

In some embodiments, the base station may configure transmission of the STxMP over a plurality of time slots according to specific start and length indicator values (SLIVs) for time domain multiplexing of the PUSCHs.

Embodiments contemplated herein include an apparatus having means to perform one or more elements of the method 400, 500, or 600. In the context of method 400, or 500, this apparatus may be, for example, an apparatus of a UE (such as a wireless device 802 that is a UE, as described herein). In the context of method 600, this apparatus may be, for example, an apparatus of a base station (such as a network device 820 that is a base station, as described herein).

Embodiments contemplated herein include one or more non-transitory computer-readable media storing instructions to cause an electronic device, upon execution of the instructions by one or more processors of the electronic device, to perform one or more elements of the method 400, 500, or 600. In the context of method 400, or 500, this non-transitory computer-readable media may be, for example, a memory of a UE (such as a memory 806 of a wireless device 802 that is a UE, as described herein). In the context of method 600, this non-transitory computer-readable media may be, for example, a memory of a base station (such as a memory 824 of a network device 820 that is a base station, as described herein).

Embodiments contemplated herein include an apparatus having logic, modules, or circuitry to perform one or more elements of the method 400, 500, or 600. In the context of method 400, or 500, this apparatus may be, for example, an apparatus of a UE (such as a wireless device 802 that is a UE, as described herein). In the context of method 600, this apparatus may be, for example, an apparatus of a base station (such as a network device 820 that is a base station, as described herein).

Embodiments contemplated herein include an apparatus having one or more processors and one or more computer-readable media, using or storing instructions that, when executed by the one or more processors, cause the one or more processors to perform one or more elements of the method 400, 500, or 600. In the context of method 400, or 500, this apparatus may be, for example, an apparatus of a UE (such as a wireless device 802 that is a UE, as described herein). In the context of the method 600, this apparatus may be, for example, an apparatus of a base station (such as a network device 820 that is a base station, as described herein).

Embodiments contemplated herein include a signal as described in or related to one or more elements of the method 400, 500, or 600.

Embodiments contemplated herein include a computer program or computer program product having instructions, wherein execution of the program by a processor causes the processor to carry out one or more elements of the method 400, 500, or 600. In the context of method 400, or 500, the processor may be a processor of a UE (such as a processor(s) 804 of a wireless device 802 that is a UE, as described herein), and the instructions may be, for example, located in the processor and/or on a memory of the UE (such as a memory 806 of a wireless device 802 that is a UE, as described herein). In the context of method 600, the processor may be a processor of a base station (such as a processor(s) 822 of a network device 820 that is a base station, as described herein), and the instructions may be, for example, located in the processor and/or on a memory of the base station (such as a memory 824 of a network device 820 that is a base station, as described herein).

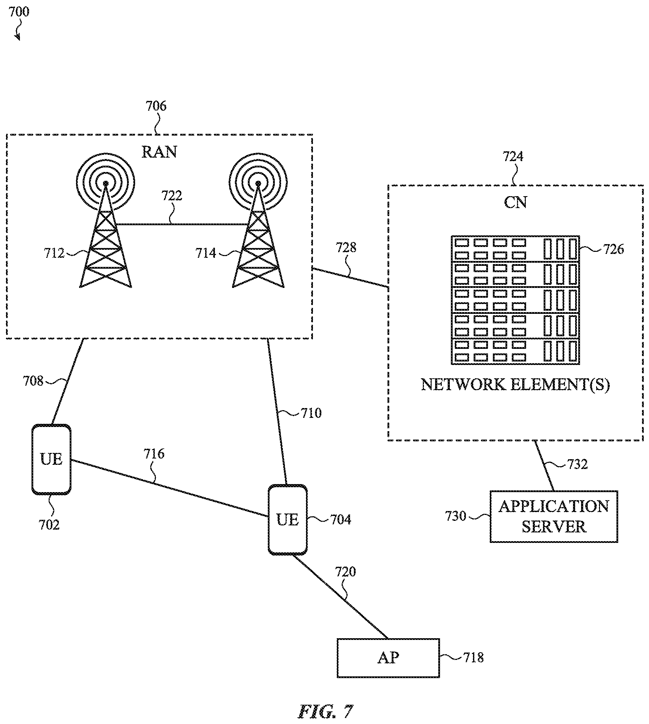

FIG. 7 illustrates an example architecture of a wireless communication system, according to embodiments described herein. The following description is provided for an example wireless communication system 700 that operates in conjunction with the LTE system standards and/or 5G or NR system standards as provided by 3GPP technical specifications.

As shown by FIG. 7, the wireless communication system 700 includes UE 702 and UE 704 (although any number of UEs may be used). In this example, the UE 702 and the UE 704 are illustrated as smartphones (e.g., handheld touchscreen mobile computing devices connectable to one or more cellular networks), but may also comprise any mobile or non-mobile computing device configured for wireless communication.

The UE 702 and UE 704 may be configured to communicatively couple with a RAN 706. In embodiments, the RAN 706 may be NG-RAN, E-UTRAN, etc. The UE 702 and UE 704 utilize connections (or channels) (shown as connection 708 and connection 710, respectively) with the RAN 706, each of which comprises a physical communications interface. The RAN 706 can include one or more base stations, such as base station 712 and base station 714, that enable the connection 708 and connection 710.

In this example, the connection 708 and connection 710 are air interfaces to enable such communicative coupling, and may be consistent with RAT(s) used by the RAN 706, such as, for example, an LTE and/or NR.

In some embodiments, the UE 702 and UE 704 may also directly exchange communication data via a sidelink interface 716. The UE 704 is shown to be configured to access an access point (shown as AP 718) via connection 720. By way of example, the connection 720 can comprise a local wireless connection, such as a connection consistent with any IEEE 802.11 protocol, wherein the AP 718 may comprise a Wi-Fi^{®} router. In this example, the AP 718 may be connected to another network (for example, the Internet) without going through a CN 724.

In embodiments, the UE 702 and UE 704 can be configured to communicate using orthogonal frequency division multiplexing (OFDM) communication signals with each other or with the base station 712 and/or the base station 714 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 712 or base station 714 may be implemented as one or more software entities running on server computers as part of a virtual network. In addition, or in other embodiments, the base station 712 or base station 714 may be configured to communicate with one another via interface 722. In embodiments where the wireless communication system 700 is an LTE system (e.g., when the CN 724 is an EPC), the interface 722 may be an X2 interface. The X2 interface may be defined between two or more base stations (e.g., two or more eNBs and the like) that connect to an EPC, and/or between two eNBs connecting to the EPC. In embodiments where the wireless communication system 700 is an NR system (e.g., when CN 724 is a 5GC), the interface 722 may be an Xn interface. The Xn interface is defined between two or more base stations (e.g., two or more gNBs and the like) that connect to 5GC, between a base station 712 (e.g., a gNB) connecting to 5GC and an eNB, and/or between two eNBs connecting to 5GC (e.g., CN 724).

The RAN 706 is shown to be communicatively coupled to the CN 724. The CN 724 may comprise one or more network elements 726, which are configured to offer various data and telecommunications services to customers/subscribers (e.g., users of UE 702 and UE 704) who are connected to the CN 724 via the RAN 706. The components of the CN 724 may be implemented in one physical device or separate physical devices including components to read and execute instructions from a machine-readable or computer-readable medium (e.g., a non-transitory machine-readable storage medium).

In embodiments, the CN 724 may be an EPC, and the RAN 706 may be connected with the CN 724 via an S1 interface 728. In embodiments, the S1 interface 728 may be split into two parts, an S1 user plane (S1-U) interface, which carries traffic data between the base station 712 or base station 714 and a serving gateway (S-GW), and the S1-MME interface, which is a signaling interface between the base station 712 or base station 714 and mobility management entities (MMEs).

In embodiments, the CN 724 may be a 5GC, and the RAN 706 may be connected with the CN 724 via an NG interface 728. In embodiments, the NG interface 728 may be split into two parts, an NG user plane (NG-U) interface, which carries traffic data between the base station 712 or base station 714 and a user plane function (UPF), and the S1 control plane (NG-C) interface, which is a signaling interface between the base station 712 or base station 714 and access and mobility management functions (AMFs).

Generally, an application server 730 may be an element offering applications that use internet protocol (IP) bearer resources with the CN 724 (e.g., packet switched data services). The application server 730 can also be configured to support one or more communication services (e.g., VoIP sessions, group communication sessions, etc.) for the UE 702 and UE 704 via the CN 724. The application server 730 may communicate with the CN 724 through an IP communications interface 732.

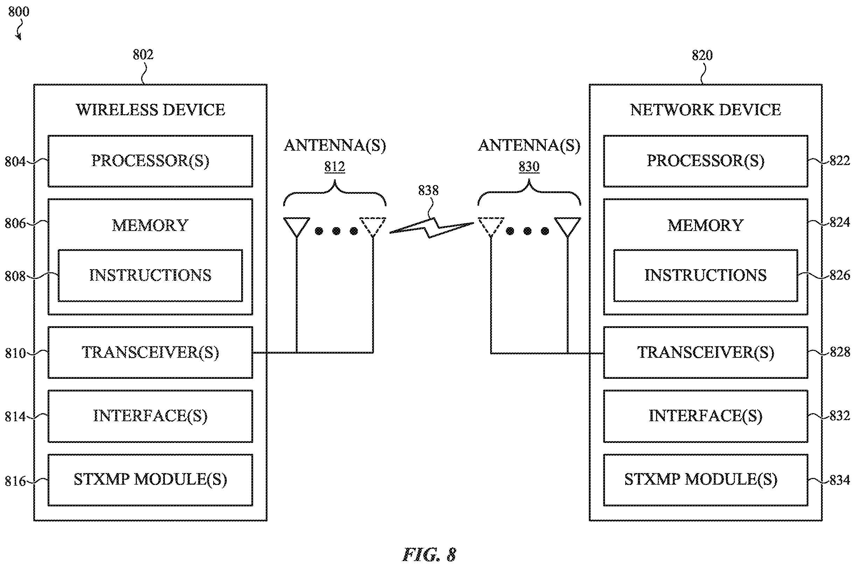

FIG. 8 illustrates a system 800 for performing signaling 838 between a wireless device 802 and a network device 820, according to embodiments described herein. The system 800 may be a portion of a wireless communication system as herein described. The wireless device 802 may be, for example, a UE of a wireless communication system. The network device 820 may be, for example, a base station (e.g., an eNB or a gNB) of a wireless communication system.

The wireless device 802 may include one or more processor(s) 804. The processor(s) 804 may execute instructions such that various operations of the wireless device 802 are performed, as described herein. The processor(s) 804 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 802 may include a memory 806. The memory 806 may be a non-transitory computer-readable storage medium that stores instructions 808 (which may include, for example, the instructions being executed by the processor(s) 804). The instructions 808 may also be referred to as program code or a computer program. The memory 806 may also store data used by, and results computed by, the processor(s) 804.

The wireless device 802 may include one or more transceiver(s) 810 that may include radio frequency (RF) transmitter and/or receiver circuitry that use the antenna(s) 812 of the wireless device 802 to facilitate signaling (e.g., the signaling 838) to and/or from the wireless device 802 with other devices (e.g., the network device 820) according to corresponding RATs.

The wireless device 802 may include one or more antenna(s) 812 (e.g., one, two, four, or more). For embodiments with multiple antenna(s) 812, the wireless device 802 may leverage the spatial diversity of such multiple antenna(s) 812 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 802 may be accomplished according to precoding (or digital beamforming) that is applied at the wireless device 802 that multiplexes the data streams across the antenna(s) 812 according to known or assumed channel characteristics such that each data stream is received with an appropriate signal strength relative to other streams and at a desired location in the spatial domain (e.g., the location of a receiver associated with that data stream). Some embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In some embodiments having multiple antennas, the wireless device 802 may implement analog beamforming techniques, whereby phases of the signals sent by the antenna(s) 812 are relatively adjusted such that the (joint) transmission of the antenna(s) 812 can be directed (this is sometimes referred to as beam steering).

The wireless device 802 may include one or more interface(s) 814. The interface(s) 814 may be used to provide input to or output from the wireless device 802. For example, a wireless device 802 that is a UE may include interface(s) 814 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 810/antenna(s) 812 already described) that allow for communication between the UE and other devices and may operate according to known protocols (e.g., Wi-Fi^{®}, Bluetooth^{®}, and the like).

The wireless device 802 may include a STxMP module 816. The STxMP module 816 may be implemented via hardware, software, or combinations thereof. For example, the STxMP module 816 may be implemented as a processor, circuit, and/or instructions 808 stored in the memory 806 and executed by the processor(s) 804. In some examples, the STxMP module 816 may be integrated within the processor(s) 804 and/or the transceiver(s) 810. For example, the STxMP module 816 may be implemented by a combination of software components (e.g., executed by a DSP or a general processor) and hardware components (e.g., logic gates and circuitry) within the processor(s) 804 or the transceiver(s) 810.

The STxMP module 816 may be used for various aspects of the present disclosure, for example, aspects of FIGs. 4-6, from the UE perspective.

The network device 820 may include one or more processor(s) 822. The processor(s) 822 may execute instructions such that various operations of the network device 820 are performed, as described herein. The processor(s) 822 may include one or more baseband processors implemented using, for example, a CPU, a DSP, an ASIC, a controller, an FPGA device, another hardware device, a firmware device, or any combination thereof configured to perform the operations described herein.

The network device 820 may include a memory 824. The memory 824 may be a non-transitory computer-readable storage medium that stores instructions 826 (which may include, for example, the instructions being executed by the processor(s) 822). The instructions 826 may also be referred to as program code or a computer program. The memory 824 may also store data used by, and results computed by, the processor(s) 822.

The network device 820 may include one or more transceiver(s) 828 that may include RF transmitter and/or receiver circuitry that use the antenna(s) 830 of the network device 820 to facilitate signaling (e.g., the signaling 838) to and/or from the network device 820 with other devices (e.g., the wireless device 802) according to corresponding RATs.

The network device 820 may include one or more antenna(s) 830 (e.g., one, two, four, or more). In embodiments having multiple antenna(s) 830, the network device 820 may perform MIMO, digital beamforming, analog beamforming, beam steering, etc., as has been described.

The network device 820 may include one or more interface(s) 832. The interface(s) 832 may be used to provide input to or output from the network device 820. For example, a network device 820 that is a base station may include interface(s) 832 made up of transmitters, receivers, and other circuitry (e.g., other than the transceiver(s) 828/antenna(s) 830 already described) that enables the base station to communicate with other equipment in a core network, and/or that enables the base station to communicate with external networks, computers, databases, and the like for purposes of operations, administration, and maintenance of the base station or other equipment operably connected thereto.

The network device 820 may include a STxMP module 834. The STxMP module 834 may be implemented via hardware, software, or combinations thereof. For example, the STxMP module 834 may be implemented as a processor, circuit, and/or instructions 826 stored in the memory 824 and executed by the processor(s) 822. In some examples, the STxMP module 834 may be integrated within the processor(s) 822 and/or the transceiver(s) 828. For example, the STxMP module 834 may be implemented by a combination of software components (e.g., executed by a DSP or a general processor) and hardware components (e.g., logic gates and circuitry) within the processor(s) 822 or the transceiver(s) 828.

The STxMP module 834 may be used for various aspects of the present disclosure, for example, aspects of FIGs. 4-6, from a base station perspective.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

The systems described herein pertain to specific embodiments but are provided as examples. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

## Claims

1. An apparatus (802) comprising a memory (806) coupled to a processor (804), the processor configured to:
receive (402), multiple downlink control informations, DCIs, corresponding to simultaneous multi-panel physical uplink shared channel, PUSCH, transmissions, STxMP;
determine (404) that the apparatus is scheduled with the STxMP overlapping in a time domain and a frequency domain by multiple physical downlink control channels, PDCCHs, corresponding to the multiple DCIs, having different values of an associated control resource set, CORESET, pool index; and
in response to the determination:
schedule (406) each PUSCH transmission of the STxMP based on associated downlink modulation reference symbols, DMRSs, in accord with an apparatus capability;
multiplex (408), in at least one PUSCH, two or more hybrid automatic repeat request acknowledgments, HARQ-ACKs, in accord with a total number of HARQ-ACKs described in a total downlink assignment index, TDAI, bit-field of each DCI of the multiple DCIs; and
determine (410) transmission of PUSCHs based on a respective data priority or scheduling of each PUSCH of the STxMP.

2. The apparatus (802) of claim 1, wherein the STxMP is partially or fully overlapping in the time domain and the frequency domain.

3. The apparatus (802) of claim 1 or claim 2, wherein the processor is configured to verify the associated DMRSs of each PUSCH transmission are aligned in time for scheduling each PUSCH transmission of the STxMP in accord with the apparatus capability.

4. The apparatus (802) of claim 3, wherein a total number of DMRSs and corresponding locations of DMRSs is the same for each PUSCH transmission of the STxMP.

5. The apparatus (802) of any preceding claim, wherein the processor (804) is configured to verify that a DMRS configuration type of the associated DMRSs for each PUSCH transmission is the same for scheduling each PUSCH transmission of the STxMP in accord with the apparatus capability.

6. The apparatus (802) of any preceding claim, wherein the processor (804) is configured to,
verify that a first DMRS port for a first PUSCH transmission belongs to a first CDM group, and a second DMRS port for a second PUSCH transmission belongs to a second CDM group, the first CDM group different from the second CDM group.

7. The apparatus (802) of any preceding claim, wherein the processor (804) is configured to verify that each PUSCH transmission of the STxMP is scheduled for transmission by intra-slot frequency hopping, FH, or no PUSCH transmission of the STxMP is scheduled for transmission by intra-slot FH.

8. The apparatus (802) of any preceding claim, wherein the processor (804) is configured to verify that at least one PUSCH transmission of the STxMP is scheduled for transmission by inter-slot frequency hopping, FH, and no FH is indicated for the remaining one or more PUSCH transmissions of the STxMP.

9. The apparatus (802) of any preceding claim, wherein to multiplex the two or more HARQ-ACKs in accord with the total number of HARQ-ACKs as described in the total downlink assignment index, TDAI, bit-field of each DCI of the multiple DCIs, the processor (804) is configured to multiplex a HARQ-ACK corresponding to each PUSCH independently.

10. The apparatus (802) of any preceding claim, wherein the TDAI bit-field of each DCI of the multiple DCIs corresponds with an associated transmission-reception point, TRP, of multiple TRPs.

11. The apparatus (802) of any of claims 1 to 9, wherein:
the TDAI bit-field of a DCI of the multiple DCIs corresponds with a transmission-reception point, TRP, of multiple TRPs; and
the TDAI bit-field indicates the total number of HARQ-ACK bits from two or more TRPs of the multiple TRPs, the processor (804) is configured to multiplex a HARQ-ACK corresponding to each PUSCH independently.

12. The apparatus (802) of claim 11, wherein:
the processor (804) is configured to multiplex the HARQ-ACK from a first TRP of the multiple TRPs and a second TRP of the multiple TRPs in accord with simultaneous transmission of a PUSCH on the first TRP and a physical uplink control channel, PUCCH, on the second TRP not being allowed.

13. The apparatus (802) of claim 12, wherein the processor (804) is configured to,
in accord with channel state information, CSI, carried by a physical uplink control channel, PUCCH, on a first TRP of the multiple TRPs overlapping with the PUSCH on the second TRP of the multiple TRPs:
drop the PUCCH when another PUCCH on the second TRP has a CSI type that is the same as a CSI type of the PUCCH on the first TRP; or
multiplex the PUCCH on the first TRP with the PUSCH on the second TRP.

14. The apparatus (802) of any preceding claim, wherein:
the transmission of the PUSCHs based on a respective data priority or the scheduling of each PUSCH of the PUSCHs is based on an apparatus capability corresponding to the STxMP having different data priorities, the apparatus capability comprising simultaneous transmission of the PUSCHs, or cancelling transmission of a PUSCH of the PUSCHs having a lower data priority based on a cancellation timeline in accord with a partial cancellation or a full cancellation.

15. The apparatus (802) of any preceding claim, wherein a transmission of a PUSCH is further based on a start time of a DCI associated with the PUSCH.

## Patentansprüche

1. Eine Vorrichtung (802), umfassend einen Speicher (806), der mit einem Prozessor (804) gekoppelt ist, wobei der Prozessor konfiguriert ist zum:
Empfangen (402) von mehreren Downlink-Steuerinformationen, DCIs, die gleichzeitigen Multi-Panel-Physical-Uplink-Shared-Channel-, PUSCH-, Übertragungen, STxMP, entsprechen;
Bestimmen (404), dass die Vorrichtung geplant ist, wobei sich die STxMP in einer Zeitdomäne und einer Frequenzdomäne durch mehrere Physical-Downlink-Control-Channels, PDCCHs, die den mehreren DCIs entsprechen, die unterschiedliche Werte eines assoziierten Control-Resource-Set-, CORESET-, Pool-Index haben, überlappen; und
als Reaktion auf die Bestimmung:
Planen (406) jeder PUSCH-Übertragung der STxMP basierend auf assoziierten Downlink-Modulationsreferenzsymbolen, DMRSs, gemäß einer Vorrichtungsfähigkeit;
Multiplexen (408), in mindestens einem PUSCH, von zwei oder mehr Hybrid-Automatic-Repeat-Request-Acknowledgements, HARQ-ACKs, gemäß einer Gesamtzahl von HARQ-ACKs, die in einem Total-Downlink-Assignment-Index-, TDAI-, Bitfeld jeder DCI der mehreren DCIs beschrieben sind; und
Bestimmen (410) einer Übertragung von PUSCHs basierend auf einer jeweiligen Datenpriorität oder Planung jedes PUSCH der STxMP.

2. Die Vorrichtung (802) nach Anspruch 1, wobei sich die STxMP in der Zeitdomäne und der Frequenzdomäne teilweise oder vollständig überlappen.

3. Die Vorrichtung (802) nach Anspruch 1 oder Anspruch 2, wobei der Prozessor konfiguriert ist zum Verifizieren, dass die assoziierten DMRSs jeder PUSCH-Übertragung zeitlich ausgerichtet sind zum Planen jeder PUSCH-Übertragung der STXMP gemäß der Vorrichtungsfähigkeit.

4. Die Vorrichtung (802) nach Anspruch 3, wobei eine Gesamtzahl von DMRSs und entsprechenden Positionen von DMRSs die gleiche ist für jede PUSCH-Übertragung der STxMP.

5. Die Vorrichtung (802) nach einem der vorhergehenden Ansprüche, wobei der Prozessor (804) konfiguriert ist zum Verifizieren, dass ein DMRS-Konfigurationstyp der assoziierten DMRSs für jede PUSCH-Übertragung der gleiche ist zum Planen jeder PUSCH-Übertragung der STxMP gemäß der Vorrichtungsfähigkeit.

6. Die Vorrichtung (802) nach einem der vorhergehenden Ansprüche, wobei der Prozessor (804) konfiguriert ist zum Verifizieren, dass ein erster DMRS-Port für eine erste PUSCH-Übertragung zu einer ersten CDM-Gruppe gehört, und ein zweiter DMRS-Port für eine zweite PUSCH-Übertragung zu einer zweiten CDM-Gruppe gehört, wobei sich die erste CDM-Gruppe von der zweiten CDM-Gruppe unterscheidet.

7. Die Vorrichtung (802) nach einem der vorhergehenden Ansprüche, wobei der Prozessor (804) konfiguriert ist zum Verifizieren, dass jede PUSCH-Übertragung der STxMP zur Übertragung durch Intra-Slot-Frequency-Hopping, FH, geplant ist oder keine PUSCH-Übertragung der STxMP zur Übertragung durch Intra-Slot-FH geplant ist.

8. Die Vorrichtung (802) nach einem der vorhergehenden Ansprüche, wobei der Prozessor (804) konfiguriert ist zum Verifizieren, dass mindestens eine PUSCH-Übertragung der STxMP zur Übertragung durch Inter-Slot-Frequency-Hopping, FH, geplant ist und kein FH für die verbleibende eine oder die verbleibenden mehreren PUSCH-Übertragungen der STxMP angezeigt wird.

9. Die Vorrichtung (802) nach einem der vorhergehenden Ansprüche, wobei zum Multiplexen der zwei oder mehr HARQ-ACKs gemäß der Gesamtzahl von HARQ-ACKs, wie in dem Total-Downlink-Assignment-Index-, TDAI-, Bitfeld jeder DCI der mehreren DCIs beschrieben, der Prozessor (804) konfiguriert ist zum unabhängigen Multiplexen einer HARQ-ACK, die jedem PUSCH entspricht.

10. Die Vorrichtung (802) nach einem der vorhergehenden Ansprüche, wobei das TDAI-Bitfeld jeder DCI der mehreren DCIs einem assoziierten Übertragungs-Empfangspunkt, TRP, von mehreren TRPs entspricht.

11. Die Vorrichtung (802) nach einem der Ansprüche 1 bis 9, wobei:
das TDAI-Bitfeld einer DCI der mehreren DCIs einem Übertragungs-Empfangspunkt, TRP, von mehreren TRPs entspricht; und
das TDAI-Bitfeld die Gesamtzahl von HARQ-ACK-Bits von zwei oder mehr TRPs der mehreren TRPs anzeigt, der Prozessor (804) konfiguriert ist zum unabhängigen Multiplexen einer HARQ-ACK, die jedem PUSCH entspricht.

12. Die Vorrichtung (802) nach Anspruch 11, wobei:
der Prozessor (804) konfiguriert ist zum Multiplexen der HARQ-ACK von einem ersten TRP der mehreren TRPs und einem zweiten TRP der mehreren TRPs gemäß einer gleichzeitigen Übertragung eines PUSCH auf dem ersten TRP und einem Physical-Uplink-Control-Channel, PUCCH, auf dem zweiten TRP, der nicht erlaubt ist.

13. Die Vorrichtung (802) nach Anspruch 12, wobei der Prozessor (804) konfiguriert ist zum, gemäß Kanalzustandsinformation, CSI, die von einem Physical-Uplink-Control-Channel, PUCCH, auf einem ersten TRP der mehreren TRPs getragen wird, der sich mit dem PUSCH auf dem zweiten TRP der mehreren TRPs überlappt:
Verwerfen des PUCCH, wenn ein anderer PUCCH auf dem zweiten TRP einen CSI-Typ hat, der der gleiche ist wie ein CSI-Typ des PUCCH auf dem ersten TRP; oder
Multiplexen des PUCCH auf dem ersten TRP mit dem PUSCH auf dem zweiten TRP.

14. Die Vorrichtung (802) nach einem der vorhergehenden Ansprüche, wobei:
die Übertragung der PUSCHs basierend auf einer jeweiligen Datenpriorität oder die Planung jedes PUSCH der PUSCHs auf einer Vorrichtungsfähigkeit basiert, die der STxMP entspricht, die unterschiedliche Datenprioritäten hat, wobei die Vorrichtungsfähigkeit eine gleichzeitige Übertragung der PUSCHs oder ein Abbrechen einer Übertragung eines PUSCH der PUSCHs mit einer niedrigeren Datenpriorität basierend auf einer Abbrechungszeitlinie gemäß einer teilweisen Abbrechung oder einer vollständigen Abbrechung umfasst.

15. Die Vorrichtung (802) nach einem der vorhergehenden Ansprüche, wobei eine Übertragung eines PUSCH ferner auf einer Startzeit einer DCI basiert, die mit dem PUSCH assoziiert ist.

## Revendications

1. Un appareil (802) comprenant une mémoire (806) couplée à un processeur (804), le processeur étant configuré pour :
recevoir (402) de multiples informations de contrôle de liaison descendante, DCI, correspondant à des transmissions de canal physique partagé de liaison montante, PUSCH, multi-panneau simultanées, STxMP ;
déterminer (404) que l'appareil est planifié avec les STxMP se chevauchant dans un domaine temporel et un domaine fréquentiel par plusieurs canaux physiques de contrôle de liaison descendante, PDCCH, correspondant aux multiples DCI, ayant des valeurs différentes d'un indice de groupe d'ensemble de ressources de contrôle, CORESET, associé ; et
en réponse à la détermination :
planifier (406) chaque transmission PUSCH des STxMP sur la base de symboles de référence de modulation, DMRS, de liaison descendante associés conformément à une capacité d'appareil ;
multiplexer (408), dans au moins un PUSCH, deux accusés de réception de requête de répétition automatique hybride, HARQ-ACK, ou plus conformément à un nombre total de HARQ-ACK décrit dans un champ de bits d'indice d'attribution de liaison descendante totale, TDAI, de chaque DCI des multiples DCI ; et
déterminer (410) la transmission de PUSCH sur la base d'une priorité de données respective ou d'une planification de chaque PUSCH des STxMP.

2. L'appareil (802) selon la revendication 1, dans lequel les STxMP se chevauchent partiellement ou entièrement dans le domaine temporel et le domaine fréquentiel.

3. L'appareil (802) selon la revendication 1 ou la revendication 2, dans lequel le processeur est configuré pour vérifier que les DMRS associés de chaque transmission PUSCH sont alignés dans le temps pour planifier chaque transmission PUSCH des STxMP conformément à la capacité d'appareil.

4. L'appareil (802) selon la revendication 3, dans lequel un nombre total de DMRS et d'emplacements correspondants de DMRS est le même pour chaque transmission PUSCH des STxMP.

5. L'appareil (802) selon l'une des revendications précédentes, dans lequel le processeur (804) est configuré pour vérifier qu'un type de configuration DMRS des DMRS associés pour chaque transmission PUSCH est le même pour planifier chaque transmission PUSCH des STxMP en fonction de la capacité d'appareil.

6. L'appareil (802) selon l'une des revendications précédentes, dans lequel le processeur (804) est configuré pour vérifier qu'un premier port DMRS pour une première transmission PUSCH appartient à un premier groupe CDM, et un second port DMRS pour une seconde transmission PUSCH appartient à un second groupe CDM, le premier groupe CDM étant différent du second groupe CDM.

7. L'appareil (802) selon l'une des revendications précédentes, dans lequel le processeur (804) est configuré pour vérifier que chaque transmission PUSCH des STxMP est planifiée pour une transmission par saut de fréquence, FH, intra-slot ou qu'aucune transmission PUSCH des STxMP n'est planifiée pour une transmission par FH intra-slot.

8. L'appareil (802) selon l'une des revendications précédentes, dans lequel le processeur (804) est configuré pour vérifier qu'au moins une transmission PUSCH des STxMP est planifiée pour une transmission par saut de fréquence, FH, interslots et qu'aucune FH n'est indiquée pour les une ou plusieurs transmissions PUSCH restantes des STxMP.

9. L'appareil (802) selon l'une des revendications précédentes, dans lequel pour multiplexer les deux HARQ-ACK ou plus conformément au nombre total de HARQ-ACK tel que décrit dans le champ de bits d'indice d'attribution de liaison descendante totale, TDAI, de chaque DCI des multiples DCI, le processeur (804) est configuré pour multiplexer indépendamment un HARQ-ACK correspondant à chaque PUSCH.

10. L'appareil (802) selon l'une des revendications précédentes, dans lequel le champ de bits TDAI de chaque DCI des multiples DCI correspond à un point d'émission-réception, TRP, associé parmi de multiples TRP.

11. L'appareil (802) selon l'une des revendications 1 à 9, dans lequel :
le champ de bits TDAI d'une DCI des multiples DCI correspond à un point d'émission-réception, TRP, parmi de multiples TRP ; et
le champ de bits TDAI indique le nombre total de bits HARQ-ACK provenant de deux TRP ou plus des multiples TRP, le processeur (804) est configuré pour multiplexer indépendamment un HARQ-ACK correspondant à chaque PUSCH.

12. L'appareil (802) selon la revendication 11, dans lequel :
le processeur (804) est configuré pour multiplexer le HARQ-ACK à partir d'un premier TRP des multiples TRP et d'un second TRP des multiples TRP conformément à la transmission simultanée d'un PUSCH sur le premier TRP et d'un canal physique de contrôle de liaison montante, PUCCH, sur le second TRP qui n'est pas autorisée.

13. L'appareil (802) selon la revendication 12, dans lequel le processeur (804) est configuré pour, conformément aux informations d'état de canal, CSI, portées par un canal physique de contrôle de liaison montante physique, PUCCH, sur un premier TRP des multiples TRP se chevauchant avec le PUSCH sur le second TRP des multiples TRP :
abandonner le PUCCH lorsqu'un autre PUCCH sur le second TRP a un type CSI qui est le même qu'un type CSI du PUCCH sur le premier TRP ; ou
multiplexer le PUCCH sur le premier TRP avec le PUSCH sur le second TRP.

14. L'appareil (802) selon l'une des revendications précédentes, dans lequel :
la transmission des PUSCH sur la base d'une priorité de données respective ou la planification de chaque PUSCH des PUSCH est basée sur une capacité d'appareil correspondant à des STxMP qui ont des priorités de données différentes, la capacité d'appareil comprenant une transmission simultanée des PUSCH, ou l'annulation de la transmission d'un PUSCH des PUSCH ayant une priorité de données inférieure sur la base d'une chronologie d'annulation conformément à une annulation partielle ou une annulation complète.

15. L'appareil (802) selon l'une des revendications précédentes, dans lequel une transmission d'un PUSCH est en outre basée sur un temps de début d'une DCI associée au PUSCH.
